# EUROPÄISCHE PATENTSCHRIFT

(11) **EP 3 603 041 B1**
(45) Veröffentlichungstag und Bekanntmachung des Hinweises auf die Patenterteilung: **06.03.2024**
(21) Anmeldenummer: 18716169.0
(22) Anmeldetag: 28.03.2018
(51) Int. Cl.: H04M 3/42, H04M 7/00

(54) **VERFAHREN ZUM BETREIBEN EINES KOMMUNIKATIONSSYSTEMS, TELEKOMMUNIKATIONSVORRICHTUNG SOWIE COMPUTERPROGRAMMPRODUKT**
METHOD FOR OPERATING A COMMUNICATION SYSTEM, TELECOMMUNICATION APPARATUS AND COMPUTER PROGRAM PRODUCT
PROCÉDÉ D'EXPLOITATION D'UN SYSTÈME DE COMMUNICATION, DISPOSITIF DE TÉLÉCOMMUNICATION ET PRODUIT-PROGRAMME INFORMATIQUE

(30) Priorität: 31.03.2017 DE 102017106958
(43) Veröffentlichungstag der Anmeldung: 05.02.2020
(73) Patentinhaber: Unify Patente GmbH & Co. KG, 81739 München (DE)
(72) Erfinder: SCHWARTZE, Juergen, 58239 Schwerte (DE); RIST, Claus, 44797 Bochum (DE)
(74) Vertreter: Schaafhausen Patentanwälte PartGmbB
(86) Internationale Anmeldenummer: PCT/EP2018/057996
(87) Internationale Veröffentlichungsnummer: WO 2018/178190

(56) Entgegenhaltungen:
- EP-A1- 2 166 733
- WO-A2-2008/117116

## Beschreibung

Die Erfindung betrifft ein Verfahren zum Betreiben eines Kommunikationssystems sowie zwei Arten von zum Ablauf des Verfahrens einsetzbaren Kommunikationsvorrichtungen und zugehörige Computerprogrammprodukte.

Insbesondere betrifft die Erfindung ein Verfahren zum Betreiben eines Kommunikationssystems, das eine Gruppe von Telekommunikationsendgeräten sowie weitere Telekommunikationsendgeräte aufweist. Die Gruppe, die auch als Gerätemenge bezeichnet werden kann, weist ein erstes Telekommunikationsendgerät auf, welches unter Einsatz einer ersten Netzwerktechnologie in einem ersten Netzwerksystem betreibbar ist. Unter "Netzwerksystem", in dem eine erste Netzwerktechnologie (einheitlich) eingesetzt wird, wird insbesondere eine Kommunikations-Domäne oder Domain verstanden. Die Netzwerktechnologie ist vor allem durch die Art der Signale, wie sie abgegeben und übertragen werden, definiert, aber auch durch die übertragenen Datenformate. Beispiele sind die Übertragung von komprimierten Audiodateien in einer GSM-Domäne oder die Übertragung von hochqualitativen Audio- und Videosignalen in einem sozialen Echtzeitzusammenarbeitssystem. Die Gruppe von Telekommunikationsendgeräten weist ein zweites Telekommunikationsendgerät auf, das unter Einsatz einer zweiten Netzwerktechnologie in einem zweiten Netzwerksystem (oder eben Domäne/Domain) betreibbar ist, wobei die zweite Netzwerktechnologie von der ersten Netzwerktechnologie verschieden ist (also die Domänen voneinander verschieden sind, was man auch so bezeichnen kann, dass das zweite Netzwerksystem eine heterogene Umgebung zum ersten Netzwerksystem darstellt und umgekehrt). Ferner sind das erste Netzwerksystem und das zweite Netzwerksystem über eine Netzwerkschnittstelleneinrichtung, beispielsweise ein Gateway, gekoppelt.

Die Erfindung passt in besonderem Maße zur Situation, dass die Gruppe von Telekommunikationsendgeräten einem einzigen Teilnehmer zugeordnet ist. Teilnehmer im Sinne der vorliegenden Anmeldung ist ein Benutzer oder Anwender einer beliebigen Art von Kommunikationsmöglichkeit, also etwa neben der Telefonie auch von Chat, Emailaustausch etc. Beispielsweise kann der Teilnehmer sowohl zum einen einen Festnetzanschluss als auch zum zweiten ein Mobilfunktelefon haben. Zum dritten kann der Benutzer auch ein Endgerät in einem vereinheitlichten Kommunikationssystem, welches Kommunikationsendgeräte in einer einheitlichen Anwendungsumgebung koppelt, besitzen. Derartige Systeme sind auch als "Unified Communications Domain" bekannt. Zum vierten kann er auch ein Telekommunikationsendgerät in einem sozialen Echtzeitzusammenarbeitssystem besitzen, wie es beispielsweise unter dem Markennamen "Circuit^{®}" von der Anmelderin bekannt ist, siehe die am 20. Februar 2017 aufrufbare Website www.circuit.com.

Ein soziales Echtzeitzusammenarbeitssystem (im Englischen auch als Social Collaboration System bezeichnet) ist ein System, bei welchem unterschiedliche Geräte oder Endstellen für unterschiedliche Kommunikationsarten synchronisiert werden, indem eine entsprechende Signalisierung zwischen den Geräten erfolgt. Innerhalb sozialen Echtzeitzusammenarbeitssystemen wie etwa im System "Circuit^{®}" werden insbesondere mehrere Endstellen eines selben Benutzers für die Kommunikation miteinander gekoppelt. So kann er gleichzeitig (parallel) chatten und telefonieren, oder es können Daten zum Teil über ein zum sozialen Echtzeitzusammenarbeitssystem gehörendes Tischtelefon einerseits und über einen Personalcomputer andererseits parallel zueinander übermittelt werden. Es ist Eigenschaft der Zusammenfassung dieser Teilnehmer unter ein System, dass solche Vorteile durch die Synchronisierung zwischen den Endgeräten gegeben sind. In einer offenen Umgebung (heterogenen Umgebung), also wenn gerade zwei unterschiedliche Netzwerksysteme, die mit unterschiedlichen Netzwerktechnologien arbeiten, gekoppelt sind, ist eine solche Synchronisierung nicht bekannt.

Im Kommunikationsalltag kommt es häufig vor, dass eine erste Person eine zweite Person anrufen möchte und es zunächst auf dem Festnetz versucht. Telefoniert die andere Person zugleich aber mit einer dritten Person über das Mobilfunknetz, so bekommt dies die auf dem Festnetz anrufende Person nicht mit. Vielmehr wird einfach nicht abgehoben. Gegebenenfalls versucht es die anrufende Person alternativ auf dem Mobilfunktelefon, um dann erst festzustellen, dass dieses besetzt ist.

Aus dem Gebiet von vereinheitlichten Kommunikationssystemen, welche Kommunikationsendgeräte in einer einheitlichen Anwendungsumgebung koppeln (Unified Communications Domains), ist es bekannt, dass innerhalb des Systems Statusinformationen bezüglich eines vom Benutzer gesetzten Status ausgetauscht werden.

WO 2008/117 116 A2 beschreibt ein Verfahren zur Bestimmung eines Gesamtpräsenzstatus eines Nutzers mit einer Vielzahl an Geräten. Der Status des Geräts wird im Gerät gespeichert und bei Änderung an die anderen Geräte weitergegeben.

EP 2 166 733 A1 beschreibt Verfahren und Systeme zur Bereitstellung vereinfachter Status eines Nutzers mehrerer Geräte. Statusinformationen der einzelnen Geräte werden zusammengeführt und einem Status-Server bereitgestellt.

Es ist die Aufgabe der vorliegenden Erfindung, einen Weg aufzuzeigen, wie Kommunikation in heterogenen Umgebungen effizienter erfolgen kann.

Die Aufgabe wird in einem ersten Aspekt durch ein Verfahren zum Betreiben eines Kommunikationssystems mit den Merkmalen gemäß Anspruch 1 gelöst, in einem anderen Aspekt durch eine Telekommunikationsvorrichtung, insbesondere ein Telekommunikationsendgerät, mit den Merkmalen gemäß Anspruch 7 oder mit den Merkmalen gemäß Anspruch 9 gelöst, und in einem weiteren Aspekt durch ein Computerprogrammprodukt mit Daten für ein Computerprogramm, insbesondere für eine Anwendungssoftware, mit den Merkmalen gemäß Anspruch 8 oder mit den Merkmalen gemäß Anspruch 10 gelöst.

Vorteilhafte Ausbildungen der Erfindung finden sich in den abhängigen Ansprüchen.

Das erfindungsgemäße Verfahren ist somit dadurch gekennzeichnet, dass ein Benutzungsstatus (oder Kommunikationsstatus) des ersten Telekommunikationsendgeräts an eine Verbindungseinrichtung in dem zweiten Netzwerksystem übermittelt wird. Der Benutzungsstatus kennzeichnet hierbei einen vermittlungstechnischen Zustand des Telekommunikationsendgeräts und ist ein geräteimmanenter Status, welcher entsprechend durch eine Datenverarbeitungseinrichtung in binären Dateneinheiten (Bits) erfassbar ist und sich bei der Bedienung oder Benutzung des Telekommunikationsendgeräts automatisch ergibt. Bei einer Kommunikationsaktivität durch ein oder an ein drittes Telekommunikationsendgerät außerhalb der Gruppe, welche dazu dient, eine Kommunikationsverbindung zwischen dem dritten und dem zweiten Telekommunikationsendgerät herzustellen oder eine solche zu beenden, oder eine solche Kommunikationsverbindung um zumindest einen weiteren Teilnehmer zu erweitern, gibt die Verbindungseinrichtung in dem zweiten Netzwerksystem eine in Abhängigkeit von dem übermittelten Benutzungsstatus des ersten Kommunikationsendgeräts definierte Kommunikationsantwort an das dritte Kommunikationsendgerät ab. Hierzu wird der vermittlungstechnische Zustand (beispielsweise besetzt oder frei) des ersten Telekommunikationsendgeräts an die Verbindungseinrichtung übermittelt, so dass das das zweite Telekommunikationsendgerät - welches ebenfalls dem gleichen Teilnehmer wie das erste Telekommunikationsendgerät zugeordnet ist - anrufende dritte Kommunikationsendgerät entsprechend dem von dem ersten Telekommunikationsendgerät übermittelten vermittlungstechnischen Zustand informiert werden kann. Wie unten beschrieben kann dies dann ebenfalls durch ein Besetztzeichen geschehen, wenn das erste Telekommunikationsendgerät besetzt ist. Alternativ oder zusätzlich wird eine Reaktion durch das zweite Telekommunikationsendgerät in Abhängigkeit von dem übermittelten Benutzungsstatus des ersten Telekommunikationsendgeräts bewirkt.

Mit anderen Worten ruft eine Person mit dem dritten Telekommunikationsendgerät bei einem Nutzer auf dessen zweitem Kommunikationsendgerät an und der Anrufende erhält eine Kommunikationsantwort, die ihn in geeigneter Weise über den Benutzungsstatus desselben Nutzers auf seinem ersten Telekommunikationsendgerät informiert. Beispielsweise kann an jeden Anrufenden ein akustisches Besetzzeichen gegeben werden, auch wenn das Telekommunikationsendgerät, welches unmittelbar angerufen wird, selbst nicht besetzt ist, sondern nur das andere Telekommunikationsendgerät desselben Benutzers (also aus derselben Gruppe) besetzt ist.

Alternativ oder zusätzlich kann dem Angerufenen auf dem anderen Telekommunikationsendgerät, welches nicht angerufen wird, aber über welches er gerade mit einer dritten Person ein Telefonat führt, die Tatsache eines Anrufs signalisiert werden. Solche Anklopffunktionen haben sowohl Tischtelefon als auch Mobilfunktelefon allgemein, diese aber bisher nur für einen Anruf auf demselben Gerät. Sie werden auch als "camp-on" bezeichnet. Sie beinhalten das Leuchten eines Lämpchens, das Ausgeben eines kurzzeitigen akustischen Signals oder eine Änderung der Lautstärke im gerade geführten Telefonat, ein Vibrieren des Telefons oder des Telefonhörers und dergleichen.

Bei einer bevorzugten Ausführungsform der Erfindung sind das erste und das zweite Netzwerksystem zwei unterschiedliche Netzwerksysteme aus der Gruppe von Netzwerksystemtypen, die besteht aus:
a) einem vereinheitlichten Kommunikationssystem, welches Kommunikationsendgeräte in einer einheitlichen Anwendungsumgebung koppelt,
b) einem Mobilfunknetzwerk,
c) einer Telefonanlage, insbesondere einer Private Branch Exchange-Anlage oder Private Automatic Branch Exchange-Anlage, oder
d) einem sozialen Echtzeitzusammenarbeitssystem.

Prinzipiell können zwei Netzwerksysteme vom selben Netzwerktyp gekoppelt werden, sofern auch die Technologie unterschiedlich ist. Vorzugsweise jedoch gehören die beiden unterschiedlichen Netzwerke auch zwei unterschiedlichen Netzwerktypen aus den Typen a), b), c) und d) an.

Vorzugsweise ist bei dem erfindungsgemäßen Verfahren vorgesehen, dass im Falle, dass das zweite Netzwerksystem eine Telefonanlage ist, die Verbindungseinrichtung desselben ein Proxyserver ist. Im Falle, dass das zweite Netzwerksystem eine Telefonanlage ist, kann die Verbindungseinrichtung auch alternativ ein für Kommunikationsverbindungen sorgender Server sein. Im Falle, dass das zweite Netzwerk ein Mobilfunknetzwerk ist, kann die Verbindungseinrichtung das zweite Telekommunikationsendgerät selbst in Form eines Mobilfunktelefons mit einer darauf gespeicherten und darauf laufenden Anwendung ("Applet", "App") sein. Im Falle, dass das zweite Netzwerksystem ein soziales Echtzeitzusammenarbeitssystem ist, kann die Verbindungseinrichtung eine Datenverarbeitungseinrichtung mit einer geeigneten Softwareschnittstelle sein.

Generell kann die Verbindungseinrichtung in Form eines Hardwaresystems vorgesehen sein, das ggf. um einen Hardware- oder Softwareplugin erweitert wird.

Bei dem erfindungsgemäßen Verfahren ist ferner vorzugsweise vorgesehen, dass im Falle, dass das erste Netzwerksystem ein vereinheitlichtes Kommunikationssystem oder ein soziales Echtzeitzusammenarbeitssystem ist, der Benutzerstatus durch ein Softwareplugin, das auf einer Datenverarbeitungseinrichtung des ersten Netzwerksystems abgespeichert ist und darauf läuft, ermittelt und zu der Verbindungseinrichtung des zweiten Netzwerksystems ausgesandt wird. Im Falle, dass das erste Netzwerksystem ein Mobilfunknetzwerksystem ist, wird der Benutzerstatus durch eine Anwendung auf einem Mobilfunktelefon als dem ersten Telekommunikationsendgerät ermittelt und zu der Verbindungseinrichtung des zweiten Netzwerksystems ausgesandt. Im Falle, dass das erste Netzwerksystem eine Telefonanlage ist, wird der Betriebsstatus durch eine Servereinheit der Telefonanlage oder einen Proxyserver, der mit der Telefonanlage gekoppelt ist, ermittelt und zu der Verbindungseinrichtung des zweiten Netzwerksystems ausgesandt.

Vorzugsweise erfolgt das Übermitteln des Benutzungsstatus mindestens bei einer Änderung desselben. Alternativ oder weiter vorzugsweise erfolgt das Übermitteln des Benutzungsstatus wiederholt, und zwar eben fortlaufend in eher kleineren Intervallen (zum Beispiel im Takt mit einer Länge zwischen 0,1 und 3 Sekunden, vorzugsweise im Takt von zwischen 0,5 und 2 Sekunden).

Vorzugsweise wird bei Bestehen einer Kommunikationsverbindung zwischen dem ersten Telekommunikationsendgerät und einem weiteren Telekommunikationsendgerät und/oder während des Herstellens einer solchen Kommunikationsverbindung der Benutzungsstatus "besetzt" an die Verbindungseinrichtung des zweiten Netzwerksystems übermittelt, und dem dritten Telekommunikationsendgerät wird ein Besetztzeichen angezeigt. Generell kann der Benutzungsstatus auch sein: "im Zustand des Rufens" (also noch nicht angenommener Ruf), "im Telefonat befindlich" oder "in Telefonkonferenz befindlich" (falls dies so ist) oder "abgehoben" (letztere drei Angaben als Differenzierung von einfach nur "besetzt"), "gerade aufgelegt habend", "frei" und Dergleichen.

Mit anderen Worten wird
a) während des Aufbaus einer Kommunikationsverbindung zwischen dem ersten Telekommunikationsendgerät und einem weiteren Telekommunikationsendgerät eine dem Benutzungsstatus "im Rufzustand" entsprechende Indikation an die Verbindungseinrichtung des zweiten Netzwerksystems übermittelt und dem dritten (an das dritte) Telekommunikationsendgerät ein entsprechendes akustisches oder optisches oder haptisch erfassbares Zeichen angezeigt beziehungsweise ausgegeben, und/oder
b) bei Bestehen einer Kommunikationsverbindung zwischen dem ersten Telekommunikationsendgerät und einem weiteren Telekommunikationsendgerät eine dem Benutzungsstatus "besetzt", "im Telefonat befindlich", "in Telefonkonferenz befindlich" oder "Hörer abgehoben" entsprechende Indikation an die Verbindungseinrichtung des zweiten Netzwerksystems übermittelt und dem dritten Telekommunikationsendgerät ein entsprechendes akustisches oder optisches oder haptisch erfassbares Zeichen ausgegeben, und/oder
c) bei der und für eine vorbestimmte Zeitdauer nach der Beendigung einer Kommunikationsverbindung zwischen dem ersten Telekommunikationsendgerät und einem weiteren Telekommunikationsendgerät eine dem Benutzungsstatus "aufgelegt" entsprechende Indikation an die Verbindungseinrichtung des zweiten Netzwerksystems übermittelt und dem dritten Telekommunikationsendgerät ein entsprechendes akustisches oder optisches oder haptisch erfassbares Zeichen ausgegeben, und/oder
d) nach Ablauf der vorbestimmten Zeitdauer nach der Beendigung einer Kommunikationsverbindung zwischen dem ersten Telekommunikationsendgerät und einem weiteren Telekommunikationsendgerät und außerhalb des Aufbaus und des Bestehens einer solchen eine dem Benutzungsstatus "frei" entsprechende Indikation an die Verbindungseinrichtung des zweiten Netzwerksystems übermittelt und dem dritten Telekommunikationsendgerät ein entsprechendes akustisches oder optisches oder haptisch erfassbares Zeichen ausgegeben.

Die erfindungsgemäße Telekommunikationsvorrichtung gemäß einem ersten Aspekt, welche vorzugsweise als Telekommunikationsendgerät ausgebildet ist und zum Betrieb in einem ersten Netzwerksystem ausgelegt ist, in dem eine erste Netzwerktechnologie angewendet wird, weist eine Datenverarbeitungseinrichtung auf, auf der ein Computerprogramm gespeichert ist, das im Betrieb (also wenn es zum Laufen gebracht wird, insbesondere in einem Arbeitsspeicher)
a) einen Benutzungsstatus der Kommunikationsvorrichtung erfasst und weiter dazu ausgelegt ist, den Benutzungsstatus an eine Einrichtung in einem zweiten Netzwerksystem zu übermitteln, in welchem eine von der ersten Netzwerktechnologie verschiedene zweite Netzwerktechnologie angewendet wird, und/oder
b) Daten empfängt, die den Benutzungsstatus einer anderen Telekommunikationsvorrichtung, insbesondere eines anderen Telekommunikationsgeräts, aus einem zweiten Netzwerksystem angeben, in welchem eine von der ersten Netzwerktechnologie verschiedene zweite Netzwerktechnologie angewendet wird, und das weiter ausgelegt ist, bei Eingehen einer Kommunikationsaktivität von einer dritten Telekommunikationsvorrichtung, insbesondere Telekommunikationsendgerät, eine Kommunikationsantwort an die dritte Telekommunikationsvorrichtung zu geben, bei deren Definition die empfangenen Daten berücksichtigt werden.

In einem weiteren Aspekt zugehörig zu der Telekommunikationsvorrichtung werden Daten für ein Computerprogramm, insbesondere eine Anwendungssoftware, bereitgestellt, welche ausgelegt sind, bei Abspeichern der Daten auf einer Datenverarbeitungseinrichtung einer Telekommunikationsvorrichtung in einem Netzwerksystem, in welchem eine erste Netzwerktechnologie angewendet wird, und wenn das Computerprogramm zum Laufen gebracht wird,
a) zu bewirken, dass der Benutzungsstatus der Telekommunikationsvorrichtung erfasst wird und an eine andere Telekommunikationsvorrichtung in einem zweiten Netzwerksystem übermittelt wird, in welchem eine zweite, von der ersten Netzwerktechnologie verschiedene Netzwerktechnologie angewendet wird, und/oder
b) zu bewirken, dass Daten empfangen werden, die den Benutzungsstatus einer anderen Telekommunikationsvorrichtung aus einem zweiten Netzwerksystem angeben, in welchem eine zweite, von der ersten Netzwerktechnologie verschiedene Netzwerktechnologie angewendet wird, und zu bewirken, dass bei Eingehen einer Kommunikationsaktivität von einer dritten Telekommunikationsvorrichtung eine Kommunikationsantwort an die dritte Telekommunikationsvorrichtung gegeben wird, bei deren Definition die empfangenen Daten berücksichtigt werden.

Gemäß einem anderen Aspekt der Erfindung wird eine Telekommunikationseinrichtung, insbesondere Telekommunikationsendgerät, bereitgestellt, welche zum Betrieb in einem ersten Netzwerksystem ausgelegt ist, in dem eine erste Netzwerktechnologie angewendet wird, mit einer Datenverarbeitungseinheit, auf der ein Computerprogramm gespeichert ist, das (also wenn es zum Laufen gebracht wird) ausgelegt ist, zu bewirken, dass Daten empfangen werden, welche angeben, dass durch eine erste andere Kommunikationsvorrichtung eine Kommunikationsaktivität erfolgt ist, um eine Kommunikationsverbindung zu einer zweiten anderen Kommunikationsvorrichtung herzustellen oder zu beenden oder zumindest eine vierte Kommunikationsvorrichtung in eine bestehende Kommunikationsverbindung einzubeziehen, und, insbesondere bei Bestehen einer Kommunikationsverbindung zu einer fünften Telekommunikationsvorrichtung, über eine Ausgabeeinrichtung der Telekommunikationsvorrichtung eine Ausgabe zu erzeugen, bei deren Festlegung (insbesondere der Festlegung von Art und Zeitpunkt der Ausgabe) die empfangenen Daten berücksichtigt werden.

Zu diesem Aspekt der Telekommunikationsvorrichtung zugehörig wird ein Computerprogrammprodukt mit Daten für ein Computerprogramm bereitgestellt, insbesondere eine Anwendungssoftware, welches ausgelegt ist, bei Abspeichern der Daten auf einer Datenverarbeitungseinrichtung einer Telekommunikationsvorrichtung in einem Netzwerksystem, in welchem eine erste Netzwerktechnologie angewendet wird, und wenn sie zum Laufen gebracht wird, zu bewirken, dass Daten empfangen werden, welche angeben, dass durch eine erste andere Kommunikationsvorrichtung eine Kommunikationsaktivität erfolgt ist, um eine Kommunikationsverbindung zu einer zweiten anderen Kommunikationsvorrichtung herzustellen oder zu beenden, oder zumindest eine vierte Kommunikationsvorrichtung in eine bestehende Kommunikationsverbindung einzubeziehen, und insbesondere bei Bestehen einer Kommunikationsverbindung zu einer fünften Datenvorrichtung, ferner zu bewirken, dass auf einer Ausgabeeinrichtung der Telekommunikationsvorrichtung eine Ausgabe erzeugt wird, bei deren Festlegung die empfangenen Daten berücksichtigt werden.

Unter Computerprogrammprodukt im Sinne der vorliegenden Anmeldung wird jedes Medium angesehen, das in der Lage ist, Daten für ein Computerprogramm zu speichern und entsprechend aufbereitet ist, dass die Daten ausgelesen werden können.

Nachfolgend werden bevorzugte Ausführungsformen der Erfindung unter Bezug auf die Zeichnung näher beschrieben, in der
Fig. 1 einen Überblick über drei Domänen zeigt, in denen ein Nutzer jeweils ein Telekommunikationsendgerät nutzt,
Fig. 2 miteinander gekoppelte Endgeräte eines Benutzers veranschaulicht, wie es im Stand der Technik verwirklicht ist,
Fig. 3 eine erfindungsgemäße Kopplung von Kommunikationsendgeräten zeigt, wie sie gemäß der Erfindung in einem Aspekt verwirklicht ist,
Figuren 4 - 6 drei alternative Ausführungsformen von Koppelzuständen zwischen unterschiedlichen Telekommunikationsendgeräten veranschaulichen.

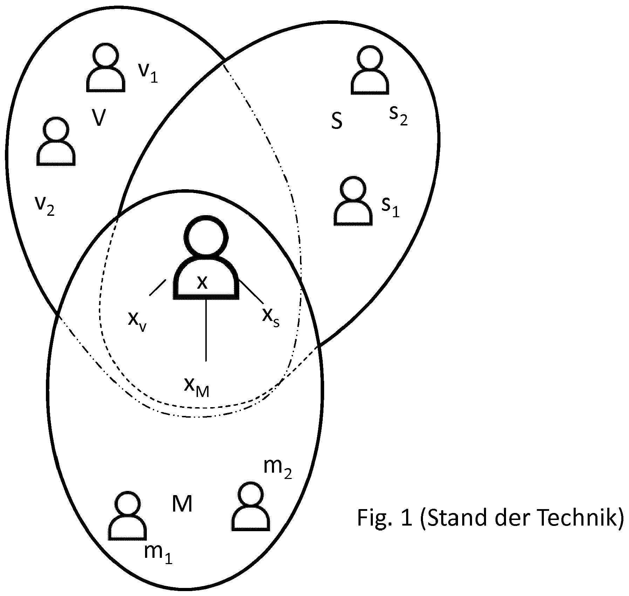

Ein in Fig. 1 gezeigter Nutzer X nutzt in einem vereinheitlichten Kommunikationssystem (Unified Communication Domain) V ein Endgerät Xv, beispielsweise ein Tischtelefon in einem Telefonnetzwerk. Andere Nutzer verfügen über weitere Telekommunikationsendgeräte v₁, v₂ in dem vereinheitlichten Kommunikationssystem. Der Nutzer X nutzt ferner ein Mobilfunktelefon X_{M} in einem Mobilfunknetzwerk M, in dem es weiter Nutzer mit Telekommunikationsendgeräten m₁ und m₂ gibt. Der Nutzer X nutzt schließlich auch ein soziales Echtzeitzusammenarbeitssystem S, wie beispielsweise das System "Circuit^{®}" der Anmelderin, wo es weitere Teilnehmer mit Telekommunikationsendgeräten s₁ und s₂ gibt.

Die einzelnen Netzwerksysteme V, M und S können auch als "Domain" bezeichnet werden, da sie unterschiedliche Netzwerktechnologien verwenden und nur über Schnittstellen miteinander koppelbar sind. Die Netzwerktechnologie betrifft insbesondere die Art der Signale und die Art ihrer Abgabe und Übertragung.

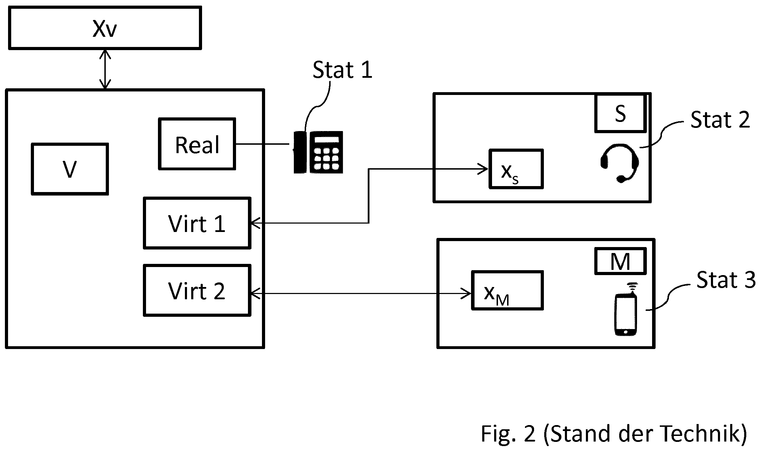

Bisher, wie in Fig. 2 für den Stand der Technik gezeigt, sind in einem vereinheitlichten Kommunikationssystem V andere Telekommunikationsgeräte außerhalb desselben durch virtuelle Vorrichtungen Virt₁, und Virt₂ repräsentiert, die lose über die konfigurierte Telefonnummer mit den anderen Netzwerksystemen S und M gekoppelt sind. Die reale (physikalische) Vorrichtung im vereinheitlichten Kommunikationssystem, etwa das Tischtelefon, ist unmittelbar mit einer entsprechenden Steuereinrichtung Real gekoppelt. Ein Status Stat1 des Nutzerzustandes gibt beispielsweise an, dass das Tischtelefon nicht benutzt ist. Hingegen kann es sein, dass der Nutzer in dem sozialen Echtzeitzusammenarbeitssystem S sein Endgerät Xₛ nutzt, sodass der Status Stat2 angibt, dass der Teilnehmer besetzt ist. Im Mobilfunknetz M ist der Endteilnehmer X_{M} durch den Status Stat3 gekennzeichnet, der ebenfalls angibt, dass der Nutzer verfügbar ist.

Obwohl also der Nutzer gemäß Stat2 gerade ein Telefonat führt oder in einer sonstigen Kommunikationsverbindung steht, ist dies für einen Anruf auf dem Tischtelefon nicht ersichtlich, da Stat1 kein Besetztzeichen wiedergibt. Auch für einen Anrufer auf dem Mobilfunkgerät ist gemäß Stat3 nicht zu erkennen, dass der Teilnehmer den Anruf gerade nicht annehmen kann.

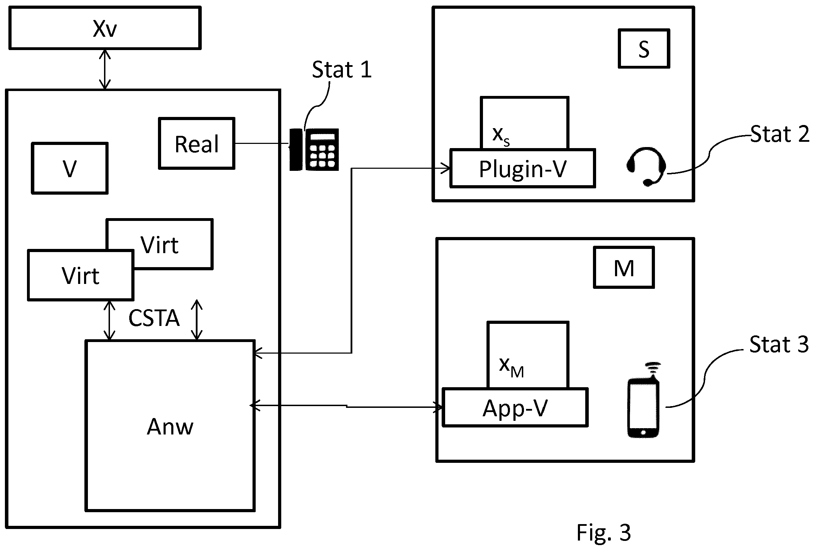

Bei der Erfindung ist es hingegen, wie in Fig. 3 gezeigt:
Auf dem vereinheitlichten Kommunikationssystem V läuft eine Anwendung Anw, die mit entsprechender Software auf den anderen Netzwerksystemen zusammenarbeitet, nämlich mit einem Plugin-V auf dem sozialen Echtzeitzusammenarbeitssystem und mit einer App-V auf dem Mobilfunktelefon.

Führt nun der Nutzer ein Gespräch über das soziale Echtzeitzusammenarbeitssystem S, sodass der Status Stat2 einem Besetztzustand entspricht, dann wird durch Vermittlung des Plugin-V und der Anwendung Anw über die entsprechende virtuelle Vorrichtung Virt in dem vereinheitlichten Kommunikationssystem auch der Status Stat1 des Tischtelefons auf besetzt gestellt, genau so auch über die Anwendung Anw und die App-V der Status Stat3 des Mobilfunktelefons X_{M} auf "besetzt" gestellt. Es ist somit möglich, den Beutzungsstatus eines Telekommunikationsendgerätes des Nutzers auf andere Telekommunikationsendgeräte desselben Nutzers zu übertragen oder jedenfalls durch diesen einen Status jeden anderen Status zu beeinflussen. Was hier beispielhaft für dieselben Telekommunikationsendgeräte eines einzelnen Nutzers erläutert wird, kann für jede beliebige Gruppe von zusammengefassten Telekommunikationsendgeräten in verschiedenen Netzwerksystemen (Domains) gelten. Somit wird eine Netzwerksystem- bzw. Domainübergreifende Synchronisierung der Nutzungszustände Stat1, Stat2 und Stat3 etc. geschaffen. Neben einem Besetzzustand kann auch die Information, wann der Benutzer zuletzt sein Telekommunikationsendgerät benutzt hatte, nicht nur bei diesem Telekommunikationsendgerät selbst abgelegt sein, sondern auch auf andere Telekommunikationsendgeräte übertragen werden. Außerdem können Abwesenheitsangaben ("in Besprechung bis ..." oder "in den Ferien, wieder zurück am ...") bei einem Gerät eingegeben und eingestellt werden und von den anderen Geräten durch die zugeordnete Synchronisation erhalten werden.

Es ist auch möglich, eine Liste der zuletzt geschaffenen Kommunikationsverbindungen netzwerksystemübergreifend zu synchronisieren.

In der Erfindung wird eine neuer Service in der CSTA ("Computer Supported Telephony Application", "computerunterstützte Telefonieanwendung") geschaffen, der vor allem bei dem Funktionsbeginn "Servicelnitiated" und beim Beendigen der Kommunikation "ConnectionCleared" erfolgt. Der Statusaustausch erfolgt zwischen dem Plugin-V und der Anwendung Anw, zwischen der Anwendung Anw und der App-V oder auch über die Anwendung Anw zwischen dem Plugin-V und der App-V. Auf diese Weise ist es möglich, beim Telefonieren oder sonstiger Kommunikation im sozialen Echtzeitzusammenarbeitssystem in dem vereinheitlichten Kommunikationssystem und dem Mobilfunknetz ein Besetztzeichen anzugeben oder dessen Anzeige zu beenden, wenn die Kommunikation im sozialen Echtzeitzusammenarbeitssystem beendet wird. Gleichermaßen kann bei einem Telefonat über das Mobilfunktelefon X_{M} ein Besetztzeichen auch angegeben werden, wenn ein dritter Teilnehmer auf dem Tischtelefon anruft. Andererseits kann auch über Knoten hinweg ein Statusaustausch innerhalb des Servers für die vereinheitlichte Kommunikation erfolgen.

Ein Nutzer wird also jedes mal, wenn er mit irgendeinem seiner Telekommunikationsendgeräte Xv, Xs und X_{M} kommuniziert, als in einer Kommunikation befindlich angezeigt, auch wenn ein Aufruf zur Kommunikation oder Telefonanruf an eines der anderen Telekommunikationsendgeräte erfolgt.

Von einem Status der Nicht-Kommunikation ("Null") ausgehend, kann der Status beibehalten und zu jedem anderen Status übergegangen werden. Wird beispielsweise auf den Status "initiiert" übergegangen, so kann auf diesen Status die Beibehaltung des Status selbst, ein Rufen ("aierting"), die Angabe eines Fehlversuchs ("failed") oder die Angabe folgen, dass der Anruf in einer Warteschleife befindlich ist ("queued"). Ausgehend vom Initiieren kann auch der Verbindungsstatus hergestellt werden. Ausgehend vom Weckruf kann ebenfalls ein Fehlversuch angegeben werden, es kann das "queueing" erfolgen, oder der Verbindungsstatus eingenommen werden. Ausgehend vom queueing-Status kann zum Verbindungsstatus übergegangen werden und umgekehrt. Außerdem kann vom Verbindungsstatus und ausgehend vom queueing-Status auf einen Haltestatus übergegangen werden. Der Haltestatus endet entweder in einem Fehlversuch, von dem aus er auch erreichbar ist, oder es erfolgt ein Ruf ("aierting) oder die Rückkehr zum Zustand "Null".

Es handelt sich hierbei um die Erläuterung des Verbindungszustandsmodells gemäß ECMA-269 (European association for standardizing information and communication systems) wie im Internet unter https://www.ecma-international.org/publications/standards/Ecma-269.htm aufrufbar am 22.02.2017).

Die Zustandsvariable lässt sich als LocalConnectionState bezeichnen. Der Übergang findet innerhalb dieser Variablen LocalConnectionState statt.

Es wird nun zunächst der Service "Set_Busy in Conversation" erläutert. Der Service "SetBusy_In Conversation" stellt zwei Funktionen zur Verfügung. Bei der Funktionsanfrage (Service Request) "SetBusyln ConversationRequest" wird der Parameter device vom Parametertypus DevicelD demjenigen Telekommunikationsendgerät zugeordnet, welches dem Nutzungszustand jeglichen anderen Telekommunikationsendgeräts oder einer Proxyvorrichtung desselben Nutzers folgen soll. Die Variable calledDevice vom Parametertypus CalledDevicelD bezeichnet die angerufene Vorrichtung und wird beispielsweise dann definiert, wenn die Initiierung der Variable LocalConnectionState erfolgt. Die Variable alertingDevice vom Parametertypus SubjectDevicelD benennt die Vorrichtung, an der der Weckruf erfolgt, d. h. der Parameter wird festgelegt, wenn der Zustand LocalConnectionState auf Weckruf stehen soll. Andere Variablen vom Typus ... DevicelD können vorgesehen sein, um weitere Vorrichtungen zu bezeichnen, die aus ECMA-269 bekannt sind und nähere Informationen bezüglich einer Verbindung bereitstellen und die zugehörige Übergangsanfrage des LocalConnectionState. Die Variable localConnectionInfo vom Variablentypus LocalConnectionState gibt den Übergang im Verbindungszustand der durch die Variable Device angegebenen Vorrichtungen an, wobei die Variable mit "n" im Zustand "Null" besetzt ist, mit "i" im Zustand "initiiert", mit "a" im Zustand des Weckrufs, mit "c" im Zustand verbunden ("connected"), mit "q" im Zustand queued, mit "h" im Zustand des Haltens, "Hold", und mit "f" im Zustand des Fehlversuchs, "failed". Die Variable reason vom Typus EventCause gibt den Grund an, warum die Verbindung sich ändert. Mögliche Werte sind den ECMA-269-Spezifikationen zu entnehmen. Weitere Informationen können Anrufscharakteristiken wie beispielsweise CallCharacteristics, ServicesPermitted und Locationlnfo angeben. Security ist die Variable vom Typus CSTASecurityData, die eine Zeitgabeninformation, die Nummer der Nachrichtensequenz und eine Sicherheitsinformation angibt. Die Variable privateData vom Typus CSTAPrivateData ist eine nicht-standardisierte Information.

Zur positiven Bestätigung der Funktionsantwort (Service Response) "SetBusylnConversationResult" gibt es den Parameter connection vom Typus ConnectionlD, der angibt, wie die Verbindung aussieht. Näheres findet sich bei ECMA-269, beispielsweise siehe initiatedConnection, originatedConnection, establishedConnection. Eine ablehnende Rückmeldung kann die Variable callLinkageData vom Typus CallLinkageData sein, die die gesamten Anrufsdaten und insbesondere die Daten dieser Anrufsreihenfolge ("thread") bezeichnet, die mit dem Anruf einhergehen. Eine noch genauere Information wie CallLinkageDataList ist ebenfalls möglich. Die Variable security vom Typus CSTASecurityData und die Variable privateData vom Typus CSTASecurityData entsprechen den oben genannten Variablen.

Erfolgt nun ein Übergang im Benutzungszustand, also die Initiierung, dann muss die Verbindung D1C1 (anrufende Vorrichtung) hergestellt werden, ausgehend vom anfänglichen Zustand "Null" oder "initiiert", und der Endzustand muss "initiiert" sein.

Zur Überwachung von Vorgangsfolgen bezüglich der Vorrichtungsart kann die überwachte Vorrichtung das Telekommunikationsendgerät D1 (anrufende Vorrichtung) sein, die Verbindung kann D1C1 sein, der Vorgang kann der initiierende der Funktion sein, und der Grund kann sein, dass ein Anruf erzeugt wird oder ein neuer Anruf ("new call") eingeht. Dies kann auch der normale Zustand sein, wenn insbesondere die Initiierung verursacht worden ist.

Wird der AnrufC1 überwacht, lautet die Verbindung D1C1, und entweder wird die Funktion initiiert (Grund: Anruf erzeugt oder neuer Anruf) oder optional hervorgerufen (neuer Anruf oder normal).

Beim Übergang im Benutzungsstatus zum Zwecke des Rufens ("Alerting") ist Grundlage für die Verbindung D1C1 der Ursprungszustand "Null" und der Endzustand ist das "Alerting", also das Klingeln bei einem Telefon oder das Eintreten in einen Modus der Verteilung der eingehenden Information in einem lokalen Netzwerk.

Zur Überwachung von D1 (der weckenden Vorrichtung) oder von C1 in der Verbindung D1C1 kann als Vorgang das Übermitteln des Signals angegeben sein ("delivered") und als Grund für den Vorgang, dass es über einen neuen Anruf ("new call"), um einen Normalzustand, oder um das Eintreten in den Datenverteiler handelt.

Weitere Beispiele für den Übergang des Nutzungszustands sind der Ursprungsmodus oder der fortgeschrittene Modus (Ursprungsmodus: "native mode", fortgeschrittener Modus: "advanced mode"). Im Ursprungsmodus wird die Übermittlung der Nachrichten als durch zwei unabhängige Anrufe erfolgend behandelt (zur ursprünglichen Vorrichtung und zur Zielvorrichtung). Im fortgeschrittenen Modus werden die Ursprungsvorrichtung und die Zielvorrichtung über denselben Anruf so behandelt, als ob die Ursprungsvorrichtung die Zielvorrichtung unmittelbar angerufen hätte. Dieses wird über eine Middleware-Komponente (Applikation) erzielt, die auf die Proxy-Vorrichtung zugreift und die Information aus den beiden unabhängigen Anrufen des ursprünglichen Modells auf einen einzigen Anruf hin abbildet. Es werden Techniken verwendet, wie sie beispielsweise aus der EP 2 875 627 B1 bekannt sind. Im Ausgangsbeispiel können alle Anwendungen sich selbst über herkömmliche Zielservices ("Gate Services") wie "Snapshot Device" und "CallControlEvents" aus der ECMA-269 synchronisieren. Es ist also eine Rückwärtskompatibilität gegeben.

Wenn die Ursprungsvorrichtung Xᵥ im vereinheitlichten Kommunikationssystem V, durch Aktivität einer Proxy-Vorrichtung in den Zustand des "in Kommunikation befindlich" bzw. "besetzt" versetzt wird, gibt es zwei Wahlmöglichkeiten für die Handhabe, was die Verarbeitung des Anrufs auf der Ursprungsvorrichtung Xᵥ angeht:
a) Parallele Anrufe sind ermöglicht, sie werden als unabhängige Anrufe behandelt,
b) Parallele Anrufe werden abgelehnt, und weitere Aktivitäten werden durch Konfiguration der Plattform oder Definition einer Extraangabe in der Funktionsanfrage "SetBusyInConversationRequest" definiert: Der Parameter parallelCall vom Boole'schen Typ wird definiert. Er wird auf "wahr" ("true") gesetzt, wenn ein paralleler Anruf zugelassen wird, und auf "falsch" ("false") gesetzt, wenn ein paralleler Anruf abgelehnt wird.

Die bekannte PABX-Funktion des Anklopfens ("camp-on") kann bei Annehmen eines parallelen Anrufs umgesetzt werden.

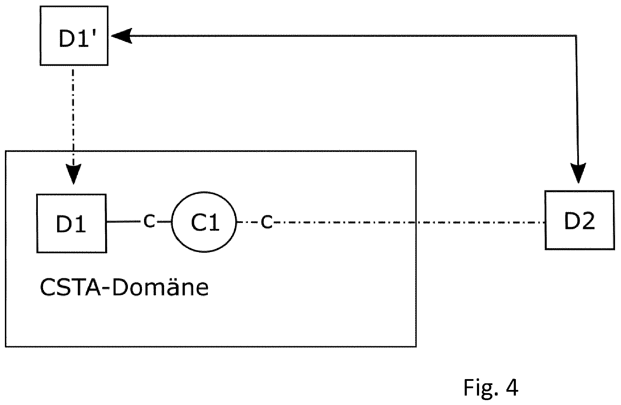

Es wird nachfolgend beispielhaft anhand der Figuren 4-6 erläutert, wie die oben beschriebene CSTA-Funktion-Parameter umgesetzt werden können.

In den Figuren 4 - 6 sind die einzelnen Telekommunikationsendgeräte eines Nutzers als D1 und D1' bezeichnet. D1 kann jedes der Geräte X_{M}, X_{V} und X_{S} sein. D1' kann jedes aus den jeweils anderen Geräten sein. D2 ist ein Telekommunikationsgerät eines anderen Teilnehmers.

Wir gehen nunmehr unter Bezug auf Fig. 4 aus von einer CSTA-Domäne (CSTA-Netzwerksystem), in der sich das Telekommunikationsendgerät D1 befindet. Derselbe Nutzer besitzt ein zweites Telekommunikationsendgerät D1`. Ein anderer Benutzer besitzt das Telekommunikationsendgerät D2. Im vorliegenden Fall ruft der Nutzer mit seinem Telekommunikationsendgerät D1' das Telekommunikationsendgerät D2 an. Die nachfolgend beschriebene Funktion soll bewirken, dass auch die Ursprungsvorrichtung D1 innerhalb der CSTA-Domäne in den Zustand des Besetztseins ("busy in conversation") gesetzt ist und entsprechende Signalausgaben bei einem Anruf angibt. Die Funktion "SetBusyInConversationRequest" beinhaltet, dass die Variable device auf den Wert D1 gesetzt wird und die Variable calledDeviceauf D2 gesetzt wird. Dies ist deswegen nur optional, weil es nur für die Synchronisierung von Anrufslisten erforderlich ist zu wissen, mit wem der Nutzer über D1' gerade telefoniert, nicht aber für den Nutzungszustand als solchen. Die Variable localConnectionInfowird auf initiiert gesetzt.

In Antwort auf diese Aktivität seitens des Telekommunikationsendgeräts D1' gibt es eine Bestätigung ("acknowledgement") über die Funktion "SetBusylnConversationResult". Die Funktion "SetBusylnConversationResult" beinhaltet, dass die Variable connection auf den Wert D1C1 gesetzt wurde. Es folgt dann die Funktion ServicelnitiatedEvent mit den Variablen initiatedConnection und dem Wert D1C1 (identisch zum Wert aus der Funktion "SetBusylnConversationResult"), der Variable initiatingDevice und dem Wert D1 (identisch zum Wert aus der Funktion SetBusylnConversationRequest), der Variable locatedConnectionInfo und dem Wert intiiert (ebenfalls identisch zum Wert aus der Funktion "SetBusylnConversationRequest") und dem Grund "neuer Anruf" angegeben als "new call". Soll der Service "Set_Busy in Conversation" nach dem Initiieren der Verbindung der weiteren Rufaufbau darstellen, ändert sich die Variable callDirectoryNumber auf D2 und die Variable locatedConnectionInfo auf den Wert "verbunden" bzw. "connected". Dies ist lediglich optional. Es folgt dann nochmals eine Bestätigung (siehe oben).

Die Funktion OriginatedEvent hat dann die Variablen originatedConnection mit dem Wert D1C1, callingDevice mit dem Wert D1, calledDevice mit dem Wert D2, localConnectionInfo mit dem Wert "verbunden" bzw. "connected und dem Grund "new call".

Beginnt das angerufene Telekommunikationsendgerät D2 zu klingeln, erhält naturgemäß das Telekommunikationsendgerät D1' eine Rückmeldung (Klingelton). Diese Rückmeldung kann aber auch dem Telekommunikationsendgerät D1 mittels des Service "Set_Busy in Conversation" und den obig geltenden Ausführungen, wenn die Variable "alertingDevice" auf verbunden steht, gegeben werden. Dies ist lediglich optional.

Somit hat die Funktion DeliveredEvent für die Variable connection den Wert D2C1 hat, für die Variable alertingDevice den Wert D2, für die Variable callingDevice den Wert D1, für die Variable calledDevice den Wert D2, für die Variable lastRedirectionDevice den Wert NR, für die Variable localConnectionInfo den Wert "verbunden" bzw. "connected", für den Grund "new call".

Im Falle, dass der Teilnehmer an dem Telekommunikationsendgerät D2 abhebt, und zwar von Hand kann alternativ zu den obigen Ausführungen mittels des Service "Set_Busy in Conversation" auch die Variable answeringDevice auf verbunden gestellt werden.

Damit wird die Funktion EstablishedEvent durchgeführt mit der Variable establishedConnection, die den Wert D2C1 aufweist, answeringDevice mit dem Wert D2, calling Device mit dem Wert D1, calledDevice mit dem Wert D2, lastRedirectionDevice mit dem Wert NR, localConnectionInfo mit dem Wert "verbunden" bzw. "connected", und den Grund findet man in "new call".

Es wurde bisher unter Bezugnahme auf die Fig. 4 beschrieben, was passiert, wenn das Telekommunikationsendgerät D2 außerhalb der CSTA-Domäne befindlich ist.

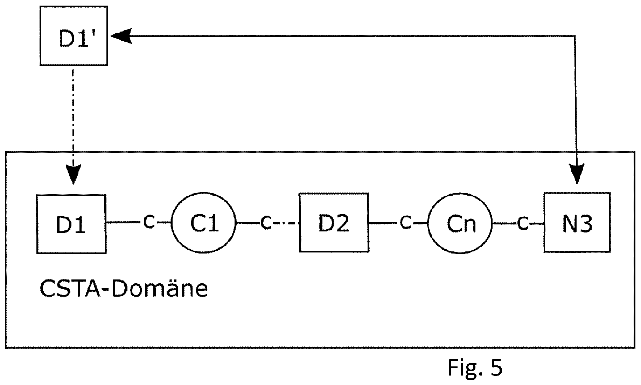

Fig. 5 zeigt nun die Situation, wenn D2 Teil der CSTA-Domäne ist. Der Anruf über das Telekommunikationsendgerät D1' geht über die Network-Trunk-Vorrichtung N3 in der CSTA-Domäne ein und wird über den Anruf Cn übermittelt.

Die Funktion "SetBusyInConversationRequest" sieht aus wie oben beschrieben. Auch die Bestätigung "SetBusylnConversationResult" sieht aus wie oben beschrieben. Zudem wird die Funktion ServicelnitiatedEvent ausgeführt wie oben beschrieben. Ergänzend findet hier jedoch bei der überwachten Vorrichtung N3 parallel die Zuordnung derselben Werte statt wie bei dem Telekommunikationsendgerät D1.

Von Interesse ist vorliegend die Funktion OriginatedEvent. Hier werden aufgrund des Service "Set_Busy in Conversation" im Bereich des Telekommunikationsendgeräts D1 die Werte für die Variablen originatedConnection auf D1C1, für callingDevice auf D1, für calledDevice auf D2, für localConnectionInfo auf "verbunden" bzw. "connected" und für den Grund auf "new call". Hingegen werden im Bereich der Vorrichtung N3 die Werte wie folgt gesetzt: Für die Variable originatedConnection auf N3Cn, für callingDevice auf D1, für called Device auf D2, für localConnectionInfo auf "verbunden" bzw. "connected" und für den Grund "new call". Zudem wird eine weitere Variable associatedCallingDevice auf den Wert N3 gesetzt.

Sobald der Klingelton bei dem Telekommunikationsendgerät D2 ausgegeben wird, und D1 mittels des Service "Set_Busy in Conversation" eine entsprechende Rückmeldung erhalten soll, werden die Variablen für die Funktion DeliveredEvent von D1 wie folgt gesetzt: connection auf D2C1, alertingDevice auf D2, callingDevice auf D1, calledDevice auf D2, lastRedirectionDevice auf NR, localConnectionInfo auf "verbunden" bzw. "connected" und der Grund auf "new call". Anders werden die Variablen gesetzt im Bereich der Vorrichtung N3 und des Telekommunikationsendgerät C2. Übereinstimmend wird für N3 und C2 hier gesetzt: connection auf D2Cn, alertingDevice auf D2, calling Device auf D1', lastRedirectionDevice auf NR, localConnectionInfo auf "verbunden" bzw. "connected" und der Grund auf "new call".

Beim Abheben auf dem Telekommunikationsendgerät werden dann mittels des Service "Set_Busy in Conversation" die Werte wie folgt gesetzt: Beim Telekommunikationsendgerät D1 wird die Funktion EstablishedEvent verwirklicht durch die Variable establishedConnection mit dem Wert D2C1, die Variable answeringDevice mit dem Wert D2, die Variable callingDevice mit dem Wert D1, calledDevice mit dem Wert D2, lastRedirectionDevice mit dem Wert NR, localConnectionInfo mit dem Wert "verbunden" bzw. "connected" und der Grund auf "new call". Im Bereich der Vorrichtung N3 lauten die Variablen: establishedConnection D2Cn, answeringDevice D2, callingDevice D1', calledDevice D2, lastRedirectionDevice NR, localConnectionInfo "verbunden" für "connected" und der Grund auf "new call". Anders als bei D1 wird also die Variable callingDevice statt auf D1 auf D1` gesetzt.

Im Bereich des Telekommunikationsendgerät D2 werden die Variablen genauso gesetzt wie bei dem Telekommunikationsendgerät D1.

In Abwandlung des oben Beschriebenen kann vorgesehen sein, dass die Information über den Anruf Cn verborgen wird. Die Variablen werden dann überall gesetzt wie oben beschrieben, nur wird für die Vorrichtung N3 keine gesonderte Variable gesetzt.

Ergänzend wird nachfolgend unter Bezugnahme auf Fig. 4 auch erläutert, was passiert, wenn der Nutzer auf seinem Telekommunikationsendgerät D1` einen Anruf der Vorrichtung D2 erhält, und wenn das Gerät D1 auf "besetzt" umgestellt wird. (Die Anrufrichtung ist also umgekehrt wie oben unter Bezug auf Fig. 4 zunächst beschrieben. Im sogenannten "Call Journal" sind also bei dem offenen Anruf die Geräte gespiegelt, Callaufbau auf Hauptapparat).

Das Umsetzen der Funktion "SetBusyInConversationRequest" umfasst das Setzen der Variablen device auf D1, der Variablen callingDevice auf D2, der Variablen localConnectionInfo auf "Alerting". Es erfolgt eine Bestätigung ("Acknowledgement") in der Funktion "SetBusylnConversationRes(ult)", bei der die Variable connection auf D1C1 gesetzt wird.

Sobald das Telekommunikationsendgerät D1' beginnt, einen Rufton auszusenden und das Telekommunikationsendgerät D2 diesen Rufton empfängt, wird mittels des Service "Set_Busy in Conversation" im Rahmen der Funktion DeliveredEvent für D1 die Variable connection auf D1C1 gesetzt, die Variable alertingDevice auf D1, callingDevice auf D2, calledDevice auf D2, lastRedirectionDevice auf NR, localConnectionInfo auf Alerting (Ruf) und cause auf "new call". Ausgehend von der Situation in Fig. 4 wird nachfolgend ferner erläutert, was passiert, wenn der Nutzungszustand des Besetztseins ("im Gespräch..." bzw. "busy in a call with...") beendet wird (durch Auflegen seitens eines Teilnehmers). In diesem Fall wird ausgehend vom Nutzungszustand des Besetztseins für das Telekommunikationsendgerät D1 der Service "Set_Busy_in_Conversation" übermittelt. Die Funktion "SetBusyInConversationRequest" beinhaltet, dass die Variable device auf D1 gesetzt wird, connection auf D1C1 und localConnectionInfo auf Null. Das Bestätigen erfolgt als "SetBusylnConversationRes(ult)"mit der Variable connection auf den Wert D1C1. Das Telekommunikationsendgerät D1 ist danach in Ruhe. Dieses wird durch Funktion ConnectionClearedEvent gekennzeichnet, welche die Variable droppedConnection auf D1C1, die Variable releasingDevice auf D1, die Variable localConnectionInfo auf Null und die Variable cause auf normal, "normal clearing" (Beendigung des Anrufs) setzt.

Weitere Anrufsteuerfunktionen wie Rückruf, Anklopfen, Konferenzschaltung, Anfrage, Anrufweiterleitung, Aufnehmen, Halten, "Intrusion" (Eingriff ins laufende Gespräch), Parken, Wiederverbinden, Wiederaufnehmen und Verbinden werden gemäß den Funktionen "localConnectionState", "devicelD", und "connectionID", wie in der Spezifikation ECMA-269 angegeben, umgesetzt.

In der Fig. 4 ist als Variable zwischen D1 und C1 ein kleines c für "connected" angegeben. Mittels des Service "SnapshotDevice" seitens des Telekommunikationsendgerät D1 kann eine Synchronisation erfolgen. In der Funktion "SnapshotDeviceRequest" wird die Variable snapshotObject auf D1 gesetzt, und zur Bestätigung in der Funktion "SnapshotDeviceResult" die Variable snapshotData auf D1C1 gesetzt, wobei in Abhängigkeit vom aktuellen Nutzungszustand dann n, i, a, c, q, h, f definiert wird.

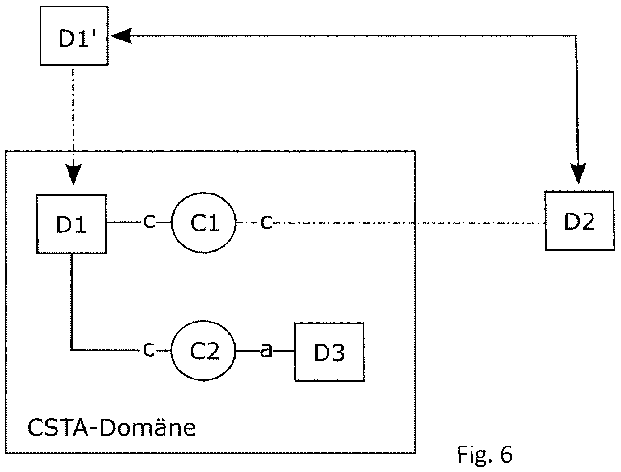

Die nachfolgende Beschreibung nimmt Bezug auf die Fig. 6 und behandelt den Fall paralleler Anrufe: Der Nutzer befindet sich mit seinem Telekommunikationsendgerät D1 in einem Anruf durch eines seiner weiteren Proxy-Vorrichtungen D1' und dem Telekommunikationsendgerät D2. Wie oben beschrieben, ist das Telekommunikationsendgerät D1 mittels des Service "SetBusy in a conversation" in den Besetztzustand versetzt. Bei dem überwachten Telekommunikationsendgerät D1 setzt dann die Funktion EstablishedEvent die Variable establishedConnection auf D2C1, answeringDevice auf D2, callingDevice auf D1, calledDevice auf D2, lastRedirectionDevice auf NR, localConnectionInfo auf "verbunden" ("connected") und die Variable für den Grund, cause, auf "new call".

Was passiert nun, wenn ein Anruf mit einem weiteren Telekommunikationsendgerät D3 ausgeführt werden darf? Dies bedeutet, dass die Variable zur Definition paralleler Anrufe den Wert "wahr" ("True") erhalten hat. Die Funktion "SetBusyInConversationRequest" setzt die Variable device auf D1, die Variable answeringDevice auf D2, localConnectionInfo auf "verbunden" ("connected") und die Variable "parallelCall" auf "wahr" ("True"). Zur Bestätigung durch Verwendung der Funktion "SetBusylnConversationResult" wird die Variable connection auf D1C1 gesetzt.. Gibt es jetzt einen Anruf vom Telekommunikationsendgerät D1 zum Telekommunikationsendgerät D3, setzt die Funktion ServicelnitiatedEvent die Variable initiatedConnection auf D1C2, initiatingDevice auf D1, localConnectionInfo auf "initiiert" ("initiated"), und die Variable cause auf "new call". Die Funktion OriginatedEvent setzt die Variable originatedConnection auf D1C2, callingDevice auf D1, calledDevice auf D3, localConnectionInfo auf "verbunden" ("connected") und den Grund auf "new call".

Schließlich setzt die Funktion "DeliveredEvent" nicht nur beim überwachten Telekommunikationsendgerät D1 die Variablen, sondern bei dem überwachten Telekommunikationsendgerät D3. Die Funktion "DeliveredEvent" setzt connection auf D3C2, alertingDevice auf D3, callingDevice auf D1, calledDevice auf D3, lastRedirectionDevice auf NR. Die Variable localConnectionInfo wird für das Telekommunikationsendgerät D1 auf "Verbunden" ("connected") gesetzt, für das Telekommunikationsendgerät D3 auf "Alerting" (Rufen). In beiden Fällen ist als Grund der cause "new call" angegeben.

## Patentansprüche

1. Verfahren zum Betreiben eines Kommunikationssystems, das eine Gruppe von Telekommunikationsendgeräten (Xv, X_{M}, X_{S}; D1, D1') sowie ein drittes Telekommunikationsendgerät (v1, v2, m1, m2, s1, s2; D2) außerhalb der Gruppe aufweist, wobei die Gruppe ein erstes Telekommunikationsendgerät (D1') aufweist, das unter Einsatz einer ersten Netzwerktechnologie in einem ersten Netzwerksystem betreibbar ist, und ein zweites Telekommunikationsendgerät (D1) aufweist, das unter Einsatz einer zweiten Netzwerktechnologie in einem zweiten Netzwerk betreibbar ist, wobei die zweite Netzwerktechnologie von der ersten Netzwerktechnologie verschieden ist und das erste Netzwerksystem und das zweite Netzwerksystem miteinander über eine Netzwerkschnittstelleneinrichtung, insbesondere ein Gateway, gekoppelt sind, **dadurch gekennzeichnet, dass**
ein Benutzungsstatus des ersten Telekommunikationsendgeräts (D1') an eine Verbindungseinrichtung (Anw, Plugin-V, App-V) in dem zweiten Netzwerksystem übermittelt wird, und
dass bei einer Kommunikationsaktivität durch ein oder an ein drittes Telekommunikationsendgerät (v1, v2, m1, m2, s1, s2; D2) außerhalb der Gruppe, welche dazu dient, eine Kommunikationsverbindung des dritten (v1, v2, m1, m2, s1, s2; D2) mit dem zweiten Telekommunikationsendgerät (D1) herzustellen oder eine solche zu beenden, oder um einen weiteren Teilnehmer (D3) zu erweitern, die Verbindungseinrichtung (Anw, Plugin-V, App-V) in dem zweiten Netzwerksystem eine in Abhängigkeit von dem übermittelten Benutzungsstatus des ersten Telekommunikationsendgeräts (D1') definierte Kommunikationsantwort an das dritte Telekommunikationsendgerät (v1, v2, m1, m2, s1, s2; D2) abgibt und/oder
eine Reaktion durch das zweite Telekommunikationsendgerät (D1) in Abhängigkeit von dem übermittelten Benutzungsstatus des ersten Telekommunikationsendgeräts (D1') bewirkt,
wobei Reaktion die folgenden Funktionen umfasst: Besetztsein, Beendigung des Anrufs, Rückruf, Anklopfen, Konferenzschaltung, Anfrage, Anrufweiterleitung, Aufnehmen, Halten, Eingriff ins laufende Gespräch, Parken, Wiederverbinden, Wideraufnehmen und Verbindung.

2. Verfahren nach Anspruch 1, **dadurch gekennzeichnet, dass** das erste und das zweite Netzwerksystem zwei unterschiedliche Netzwerke aus der Gruppe von Netzwerksystemen aus
a) einem vereinheitlichten Kommunikationssystem (V), welches Telekommunikationsendgeräte in einer einheitlichen Anwendungsumgebung koppelt,
b) einem Mobilfunknetzwerk (M),
c) einer Telefonanlage, insbesondere ein Private Branch Exchange oder Private Automatic Branch Exchange-Anlage und
d) einem soziales Echtzeitzusammenarbeitssystem (S) sind.

3. Verfahren nach Anspruch 1 oder 2, **dadurch gekennzeichnet, dass**
im Falle, dass das zweite Netzwerksystem eine Telefonanlage ist, die Verbindungseinrichtung ein Proxyserver oder ein für Kommunikationsverbindungen zugeordneter Server ist, und dass
im Falle, dass das zweite Netzwerksystem ein Mobilfunknetzwerk ist, die Verbindungseinrichtung des zweiten Telekommunikationsendgeräts (M) selbst in Form eines Mobilfunktelefons (X_{M}) mit einer darauf gespeicherten und laufenden Anwendung (App-V) ist, und dass im Falle, dass das zweite Netzwerksystem ein soziales Echtzeitzusammenarbeitssystem ist, die Verbindungseinrichtung eine Datenverarbeitungseinrichtung mit einer Softwareschnittstelle (Plugin-V) ist.

4. Verfahren nach einem der vorhergehenden Ansprüche, **dadurch gekennzeichnet, dass** im Falle, dass das erste Netzwerksystem ein vereinheitlichtes Kommunikationssystem (V) oder ein soziales Echtzeitzusammenarbeitssystem (S) ist, der Benutzerstatus durch ein Softwareplugin das auf einer Datenverarbeitungseinrichtung des ersten Netzwerksystems abgespeichert ist und dort läuft, ermittelt und zu der Verbindungseinrichtung des zweiten Netzwerksystems ausgesendet wird, dass im Falle, dass das erste Netzwerksystem ein Mobilfunknetzwerksystem ist, der Benutzungsstatus durch eine Anwendung auf einem Mobilfunktelefon als dem ersten Telekommunikationsgerät ermittelt und zu der Verbindungseinrichtung des zweiten Netzwerksystems ausgesandt wird, und dass im Falle, dass das erste Netzwerksystem eine Telefonanlage ist, der Benutzungsstatus durch eine Servereinheit der Telefonanlage oder einem Proxyserver, der mit der Telefonanlage gekoppelt ist, ermittelt und zu der Verbindungseinrichtung des zweiten Netzwerksystems ausgesandt wird.

5. Verfahren nach einem der vorhergehenden Ansprüche, **dadurch gekennzeichnet, dass** das Übermitteln des Benutzungsstatus mindestens bei einer Änderung des Benutzungsstatus und/oder fortlaufend wiederholt erfolgt.

6. Verfahren nach einem der vorhergehenden Ansprüche, **dadurch gekennzeichnet, dass**
a) während des Aufbaus einer Kommunikationsverbindung zwischen dem ersten Telekommunikationsendgerät (D1') und einem weiteren Telekommunikationsendgerät eine dem Benutzungsstatus "im Rufzustand" entsprechende Indikation an die Verbindungseinrichtung des zweiten Netzwerksystems übermittelt und an das dritte Telekommunikationsendgerät ein entsprechendes akustisches oder optisches oder haptisch erfassbares Zeichen ausgegeben wird, und/oder
b) bei Bestehen einer Kommunikationsverbindung zwischen dem ersten Telekommunikationsendgerät (D1') und einem weiteren Telekommunikationsendgerät eine dem Benutzungsstatus "besetzt" , "im Telefonat befindlich", "in Telefonkonferenz befindlich" oder "Hörer abgehoben" entsprechende Indikation an die Verbindungseinrichtung des zweiten Netzwerksystems übermittelt und an das dritte Telekommunikationsendgerät ein entsprechendes akustisches oder optisches oder haptisch erfassbares Zeichen ausgegeben wird, und/oder
c) bei der und für eine vorbestimmte Zeitdauer nach der Beendigung einer Kommunikationsverbindung zwischen dem ersten Telekommunikationsendgerät (D1') und einem weiteren Telekommunikationsendgerät eine dem Benutzungsstatus "aufgelegt" entsprechende Indikation an die Verbindungseinrichtung des zweiten Netzwerksystems übermittelt und an das dritte Telekommunikationsendgerät ein entsprechendes akustisches oder optisches oder haptisch erfassbares Zeichen ausgegeben wird, und/oder
d) nach Ablauf der vorbestimmten Zeitdauer nach der Beendigung einer Kommunikationsverbindung zwischen dem ersten Telekommunikationsendgerät (D1') und einem weiteren Telekommunikationsendgerät und außerhalb des Aufbaus und des Bestehens einer solchen eine dem Benutzungsstatus "frei" entsprechende Indikation an die Verbindungseinrichtung des zweiten Netzwerksystems übermittelt und an das dritte Telekommunikationsendgerät ein entsprechendes akustisches oder optisches oder haptisch erfassbares Zeichen ausgegeben wird.

7. Telekommunikationsvorrichtung (Xv, X_{M}, X_{S}; D1, D1'), insbesondere als Telekommunikationsendgerät ausgebildet, welche zum Betrieb in einem ersten Netzwerksystem ausgelegt ist, in dem eine erste Netzwerktechnologie angewendet wird, und welche eine Datenverarbeitungseinheit (Anw, Plugin-V, App-V) aufweist, auf der ein Computerprogramm gespeichert ist, das im Betrieb
a) einen Benutzungsstatus der Telekommunikationsvorrichtung (Xv, X_{M}, X_{S}; D1, D1') erfasst und dazu ausgelegt ist, den Benutzungsstatus an eine andere Telekommunikationsvorrichtung (X_{V}, X_{M}, X_{S}; D1, D1') in einem zweiten Netzwerksystem zu übermitteln, in welchem eine von der ersten Netzwerktechnologie verschiedene zweite Netzwerktechnologie angewendet wird, und
b) Daten empfängt, die den Benutzungsstatus einer anderen Telekommunikationsvorrichtung (Xv, X_{M}, X_{S}; D1, D1') aus einem zweiten Netzwerksystem angeben, in welchem eine von der ersten Netzwerktechnologie verschiedene zweite Technologie angewendet wird, und bei Eingehen einer Kommunikationsaktivität an eine oder von einer dritten Telekommunikationsvorrichtung (v1, v2, m1, m2, s1, s2; D2) außerhalb der Gruppe eine Kommunikationsantwort an die dritte Telekommunikationsvorrichtung (v1, v2, m1, m2, s1, s2; D2) zu geben, bei deren Definition die empfangenen Daten berücksichtigt werden;
wobei das erste Netzwerksystem und das zweite Netzwerksystem miteinander über eine Netzwerkschnittstelleneinrichtung, insbesondere ein Gateway, gekoppelt sind.

8. Computerprogrammprodukt mit Daten für ein Computerprogramm, insbesondere eine Anwendungssoftware, welche ausgelegt sind, bei Abspeichern der Daten auf eine Datenverarbeitungseinrichtung (Anw, Plugin-V, App-V) einer Telekommunikationsvorrichtung (X_{V}, X_{M}, X_{S}; D1, D1') in einem ersten Netzwerksystem, in welchem eine erste Netzwerktechnologie angewendet wird, und wenn das Computerprogramm zum Laufen gebracht wird,
a) zu bewirken, dass der Benutzungsstatus der Telekommunikationsvorrichtung (Xv, X_{M}, Xs; D1, D1') erfasst wird und an eine andere Telekommunikationsvorrichtung (Xv, X_{M}, X_{S}; D1, D1') in einem zweiten Netzwerksystem übermittelt wird, in welchem eine zweite, von der ersten Netzwerktechnologie verschiedene Netzwerktechnologie angewendet wird, und
b) zu bewirken, dass Daten empfangen werden, die den Benutzungsstatus einer anderen Telekommunikationsvorrichtung (X_{V}, X_{M}, X_{S}; D1, D1') aus einem zweiten Netzwerksystem angeben, in welchem eine zweite, von der ersten Netzwerktechnologie verschiedene Netzwerktechnologie angewendet wird, und zu bewirken, dass bei Eingehen einer Kommunikationsaktivität an eine oder von einer dritten Telekommunikationsvorrichtung (v1, v2, m1, m2, s1, s2; D2) außerhalb der Gruppe eine Kommunikationsantwort an die dritte Telekommunikationsvorrichtung (v1, v2, m1, m2, s1, s2; D2) gegeben wird, bei deren Definition die empfangenen Daten berücksichtigt werden;
wobei das erste Netzwerksystem und das zweite Netzwerksystem miteinander über eine Netzwerkschnittstelleneinrichtung, insbesondere ein Gateway, gekoppelt sind.

9. Telekommunikationsvorrichtung (Xv, X_{M}, X_{S}; D1, D1'), insbesondere als Telekommunikationsendgerät ausgebildet, welche zum Betrieb in einem ersten Netzwerksystem ausgelegt ist, in dem eine erste Netzwerktechnologie angewendet wird, und welche eine Datenverarbeitungseinheit aufweist, auf der ein Computerprogramm gespeichert ist, das ausgelegt ist, im Betrieb Daten zu empfangen, die angeben, dass durch eine erste andere Kommunikationsvorrichtung (Xv, X_{M}, X_{S}; D1, D1') eine Kommunikationsaktivität erfolgt ist, um eine Kommunikationsverbindung zu einer zweiten anderen Kommunikationsvorrichtung (D2) herzustellen und zumindest eine vierte Kommunikationsvorrichtung (D3) in eine bestehende Kommunikationsverbindung einbeziehen, und über eine Ausgabeeinrichtung (CSTA) der Telekommunikationsvorrichtung (Xv, X_{M}, X_{S}; D1, D1') eine Ausgabe zu erzeugen, bei deren Festlegung die empfangenen Daten berücksichtigt werden;
wobei die erste andere Kommunikationsvorrichtung (Xv, X_{M}, X_{S}; D1, D1') unter Einsatz einer zweiten Netzwerktechnologie in einem zweiten Netzwerk betreibbar ist,
wobei die zweite Netzwerktechnologie von der ersten Netzwerktechnologie verschieden ist und
wobei das erste Netzwerksystem und das zweite Netzwerksystem miteinander über eine Netzwerkschnittstelleneinrichtung, insbesondere ein Gateway, gekoppelt sind.

10. Computerprogrammprodukt mit Daten für ein Computerprogramm, insbesondere eine Anwendungssoftware, welches ausgelegt ist, bei Abspeichern der Daten auf eine Datenverarbeitungseinrichtung einer Telekommunikationsvorrichtung (Xv, X_{M}, X_{S}; D1, D1'), wenn sie zum Laufen gebracht wird, zu bewirken, dass Daten empfangen werden, die angeben, dass durch eine erste andere Kommunikationsvorrichtung (Xv, X_{M}, X_{S}; D1, D1') eine Kommunikationsaktivität erfolgt ist, um eine Kommunikationsverbindung zu einer zweiten anderen Kommunikationsvorrichtung (D2) herzustellen und zumindest eine vierte Kommunikationsvorrichtung (D3) in eine bestehende Kommunikationsverbindung einzubeziehen, und über eine Ausgabeeinrichtung der Telekommunikationsvorrichtung (Xv, X_{M}, X_{S}; D1, D1') eine Ausgabe erzeugt, bei deren Festlegung die empfangenen Daten berücksichtigt werden;
wobei die erste andere Kommunikationsvorrichtung (Xv, X_{M}, X_{S}; D1, D1') unter Einsatz einer zweiten Netzwerktechnologie in einem zweiten Netzwerk betreibbar ist,
wobei die zweite Netzwerktechnologie von der ersten Netzwerktechnologie verschieden ist und
wobei das erste Netzwerksystem und das zweite Netzwerksystem miteinander über eine Netzwerkschnittstelleneinrichtung, insbesondere ein Gateway, gekoppelt sind.

## Claims

1. Method for operating a communication system comprising a group of telecommunication terminals (X_{V}, X_{M}, X_{S}; D1, D1') and a third telecommunication terminal (v1, v2, m1, m2, s1, s2; D2) outside the group, the group comprising a first telecommunication terminal (D1') which can be operated using a first network technology in a first network system and a second telecommunication terminal (D1) which can be operated using a second network technology in a second network, wherein the second network technology is different from the first network technology and the first network system and the second network system are coupled to each other via a network interface device, in particular a gateway, **characterized in that**
a use status of the first telecommunication terminal (D1') is transmitted to a connection device (Anw, Plugin-V, App-V) in the second network system, and
during a communication activity by or to a third telecommunication terminal (v1, v2, m1, m2, s1, s2; D2) outside the group, which serves to establish a communication connection of the third (v1, v2, m1, m2, s1, s2; D2) with the second telecommunication terminal (D1) or to terminate such a connection, or to add a further user (D3), the connection device (Anw, Plugin-V, App-V) in the second network system provides a communication response to the third telecommunication terminal (v1, v2, m1, m2, s1, s2; D2) defined depending on the transmitted use status of the first telecommunication terminal (D1'), and/or
causes a response by the second telecommunication terminal (D1) depending on the transmitted use status of the first telecommunication terminal (D1'),
wherein the response comprises the following functions: busy, end call, callback, call waiting, conference call, request, forward call, pick up, hold, intervene in current call, park, reconnect, pick up again and connect.

2. Method according to claim 1, **characterized in that** the first and second network systems are two different networks from the group of network systems comprising
a) a unified communication system (V) which couples telecommunication terminals in a unified application environment,
b) a mobile phone network (M),
c) a telephone system, in particular a Private Branch Exchange or Private Automatic Branch Exchange system, and
d) a real-time social collaboration system (S).

3. Method according to claim 1 or 2, **characterized in that**
in the event that the second network system is a telephone system, the connection device is a proxy server or a server assigned for communication connections, and **in that**
in the event that the second network system is a mobile phone network, the connection device of the second telecommunication terminal (M) is itself in the form of a mobile phone (X_{M}) with an application (App-V) stored and running thereon, and in the event that the second network system is a real-time social collaboration system, the connection device is a data processing device with a software interface (Plugin-V).

4. Method according to anyone of the preceding claims, **characterized in that**, in the event that the first network system is a unified communication system (V) or a real-time social collaboration system (S), the use status is determined by a software plug-in stored on and running on a data processing device of the first network system and is sent to the connection device of the second network system, **in that**, in the event that the first network system is a mobile phone network system, the use status is determined by an application on a mobile phone as the first telecommunication device and is sent to the connection device of the second network system, and that, in the event that the first network system is a telephone system, the use status is determined by a server unit of the telephone system or a proxy server coupled to the telephone system and is sent to the connection device of the second network system.

5. Method according to anyone of the preceding claims, **characterized in that** the transmission of the use status is repeated at least when the use status changes and/or continuously.

6. Method according to anyone of the preceding claims, **characterized in that**
a) during the establishment of a communication link between the first telecommunication terminal (D1') and a further telecommunication terminal, an indication corresponding to the use status "in call state" is transmitted to the connection device of the second network system and a corresponding acoustic or optical or haptically detectable signal is output to the third telecommunication terminal, and/or
b) when a communication connection exists between the first telecommunication terminal (D1') and a further telecommunication terminal, an indication corresponding to the use status "busy", "in telephone call ", "in telephone conference" or "handset lifted" is transmitted to the connection device of the second network system and a corresponding acoustic or optical or haptically detectable signal is output to the third telecommunication terminal, and/or
c) during and for a predetermined period after the termination of a communication connection between the first telecommunication terminal (D1') and a further telecommunication terminal, an indication corresponding to the use status "on-hook" is transmitted to the connection device of the second network system and a corresponding acoustic or optical or haptically detectable signal is output to the third telecommunication terminal, and/or
d) after the predetermined period has expired following the termination of a communication connection between the first telecommunication terminal (D1') and a further telecommunication terminal and beyond the establishment and existence of such a connection, an indication corresponding to the use status "free" is transmitted to the connection device of the second network system and a corresponding acoustic or optical or haptically detectable signal is output to the third telecommunication terminal.

7. Telecommunication device (Xv, X_{M}, X_{S}; D1, D1'), in particular in the form of a telecommunication terminal, designed for operation in a first network system in which a first network technology is used and having a data processing unit (Anw, Plugin-V, App-V) on which a computer program is stored which, when operating
a) detects a use status of the telecommunication device (X_{V}, X_{M}, X_{S}; D1, D1') and is designed to transmit the use status to another telecommunication device (Xv, X_{M}, X_{S}; D1, D1') in a second network system in which a second network technology different from the first network technology is used, and
b) receives data which indicate the use status of another telecommunication device (X_{V}, X_{M}, X_{S}; D1, D1') from a second network system in which a second technology different from the first network technology is used, and, on receipt of a communication activity to or from a third telecommunication device (v1, v2, m1, m2, s1, s2; D2) outside the group, give a communication response to the third telecommunication device (v1, v2, m1, m2, s1, s2; D2), in the definition of which the received data is taken into account;
wherein the first network system and the second network system are coupled to each other via a network interface device, in particular a gateway.

8. Computer program product with data for a computer program, in particular an application software, which, when the data are stored on a data processing device (Anw, Plugin-V, App-V) of a telecommunication device (X_{V}, X_{M}, X_{S}; D1, D1') in a first network system in which a first network technology is used, and when the computer program is running, are configured
a) to cause the use status of the telecommunication device (X_{V}, X_{M}, X_{S}; D1, D1') to be recorded and transmitted to another telecommunication device (X_{V}, X_{M}, X_{S}; D1, D1') in a second network system in which a second network technology, different from the first network technology, is used
b) to cause data to be received that indicates the use status of another telecommunication device (X_{V}, X_{M}, X_{S}; D1, D1') from a second network system in which a second network technology different from the first network technology is used, and to cause, upon receipt of a communication activity to or from a third telecommunication device (v1, v2, m1, m2, s1, s2; D2) outside the group, a communication response to be given to the third telecommunication device (v1, v2, m1, m2, s1, s2; D2), in the definition of which the received data is taken into account;
wherein the first network system and the second network system are coupled to each other via a network interface device, in particular a gateway.

9. Telecommunication device (Xv, X_{M}, X_{S}; D1, D1'), in particular configured as a telecommunication terminal, which is configured to operate in a first network system in which a first network technology is used, and having a data processing unit on which a computer program is stored which is designed to receive, when operating, data indicating that a communication activity has occured by a first other communication device (X_{V}, X_{M}, X_{S}; D1, D1') in order to establish a communication link to a second other communication device (D2) and to include at least a fourth communication device (D3) in an existing communication link, and to generate, via an output device (CSTA) of the telecommunication device (Xv, X_{M}, X_{S}; D1, D1'), an output in the determination of which the received data is taken into account;
wherein the first other communication device (Xv, X_{M}, X_{S}; D1, D1') is operable in a second network using a second network technology,
wherein the second network technology is different from the first network technology; and
wherein the first network system and the second network system are coupled to each other via a network interface device, in particular a gateway.

10. Computer program product comprising data for a computer program, in particular application software, which is configured, upon storing the data on a data processing device of a telecommunication device (X_{V}, X_{M}, X_{S}; D1, D1'), when made to run, to cause data to be received which indicate that a communication activity has occurred by a first other communication device (X_{V}, X_{M}, X_{S}; D1, D1'), in order to establish a communication link to a second other communication device (D2) and to include at least a fourth communication device (D3) in an existing communication link, and to generate, via an output device of the telecommunication device (Xv, X_{M}, X_{S}; D1, D1'), an output in the determination of which the received data is taken into account;
wherein the first other communication device (Xv, X_{M}, X_{S}; D1, D1') is operable in a second network using a second network technology,
wherein the second network technology is different from the first network technology; and
wherein the first network system and the second network system are coupled to each other via a network interface device, in particular a gateway.

## Revendications

1. Procédé d'exploitation d'un système de communication comprenant un groupe de terminaux de télécommunication (XV, XM, XS ; D1, D1') et un troisième terminal de télécommunication (v1, v2, m1, m2, s1, s2 ; D2) en dehors du groupe, le groupe comprenant un premier terminal de télécommunication (D1') pouvant fonctionner en utilisant une première technologie de réseau dans un premier système de réseau et un deuxième terminal de télécommunication (D1) pouvant fonctionner en utilisant une deuxième technologie de réseau dans un deuxième réseau, la deuxième technologie de réseau étant différente de la première technologie de réseau et le premier système de réseau et le deuxième système de réseau étant couplés l'un à l'autre via un dispositif d'interface de réseau, en particulier une passerelle, **caractérisé en ce que**
un état d'utilisation du premier terminal de télécommunication (D1') est transmis à un dispositif de connexion (Anw, Plugin-V, App-V) dans le deuxième système de réseau, et
lors d'une activité de communication par ou vers un troisième terminal de télécommunication (v1, v2, m1, m2, s1, s2 ; D2) extérieur au groupe, laquelle sert à établir une liaison de communication du troisième (v1, v2, m1, m2, s1, s2 ; D2) avec le deuxième terminal de télécommunication (D1) ou à mettre fin à une telle communication, ou à l'étendre à un autre utilisateur (D3), le dispositif de connexion (Anw, Plugin-V, App-V) dans le deuxième système de réseau fournit au troisième terminal de télécommunication (v1, v2, m1, m2, s1, s2 ; D2) une réponse de communication définie en fonction de l'état d'utilisation du premier terminal de télécommunication (D1') qui a été transmis, et/ou
provoque une réaction par le deuxième terminal de télécommunication (D1) en fonction de l'état d'utilisation du premier terminal de télécommunication (D1') qui a été transmis,
la réaction comprenant les fonctions suivantes: occupé, fin d'appel, rappel, appel en attente, conférence, demande, transfert d'appel, prise d'appel, mise en attente, intervention dans l'appel en cours, mise en parc, reconnexion, reprise d'appel et connexion.

2. Procédé selon la revendication 1, **caractérisé en ce que** le premier et le deuxième système de réseau sont deux réseaux différents choisis dans le groupe de systèmes de réseau constitué
a) d'un système de communication unifié (V) qui couple des terminaux de télécommunication dans un environnement d'application unifié,
b) d'un réseau téléphonique mobile (M),
c) d'un système téléphonique, en particulier un système d'échange de branche privé ou un système d'échange de branche privé automatique, et
d) d'un système de collaboration sociale en temps réel (S).

3. Procédé selon la revendication 1 ou 2, **caractérisé en ce que**
dans le cas où le second système de réseau est un système téléphonique, le dispositif de connexion est un serveur proxy ou un serveur affecté aux connexions de communication, et **en ce que**
dans le cas où le deuxième système de réseau est un réseau téléphonique mobile, le dispositif de connexion du deuxième terminal de télécommunication (M) se présente lui-même sous la forme d'un téléphone mobile (X_{M}) avec une application (App-V) stockée et fonctionnant sur celui-ci, et dans le cas où le deuxième système de réseau est un système de collaboration sociale en temps réel, le dispositif de connexion est un dispositif de traitement de données avec une interface de logiciel (Plugin-V).

4. Procédé selon l'une des revendications précédentes, **caractérisé en ce que**, dans le cas où le premier système de réseau est un système de communication unifié (V) ou un système de collaboration sociale en temps réel (S), l'état d'utilisation est déterminé par un plugin logiciel stocké et exécuté sur un dispositif de traitement de données du premier système de réseau et est envoyé au dispositif de connexion du deuxième système de réseau, **en ce que**, dans le cas où le premier système de réseau est un système de réseau téléphonique mobile, l'état d'utilisation est déterminé par une application sur un téléphone mobile en tant que premier appareil de télécommunication et est envoyé au dispositif de connexion du deuxième système de réseau, et **en ce que**, dans le cas où le premier système de réseau est une installation téléphonique, l'état d'utilisation est déterminé par une unité de serveur de l'installation téléphonique ou par un serveur proxy couplé à l'installation téléphonique et est envoyé au dispositif de connexion du deuxième système de réseau.

5. Procédé selon l'une des revendications précédentes, **caractérisé en ce que** la transmission de l'état d'utilisation est répétée au moins lors d'un changement de l'état d'utilisation et/ou de manière continue.

6. Procédé selon l'une des revendications précédentes, **caractérisé en ce que**
a) pendant l'établissement d'une liaison de communication entre le premier terminal de télécommunication (D1') et un autre terminal de télécommunication, une indication correspondant à l'état d'utilisation "en état d'appel" est transmise au dispositif de liaison du deuxième système de réseau et un signe acoustique ou optique ou tactile correspondant est délivré au troisième terminal de télécommunication, et/ou
b) en présence d'une liaison de communication entre le premier terminal de télécommunica-tion (D1') et un autre terminal de télécommunication, une indication correspondant à l'état d'utilisation "occupé", "en conversation téléphonique", "en conférence téléphonique" ou "combiné décroché" est transmise au dispositif de liaison du deuxième système de réseau et un signe acoustique ou optique ou tactile correspondant est émis vers le troisième terminal de télécommu-nication, et/ou
c) au moment et pendant une durée prédéterminée après la fin d'une liaison de communica-tion entre le premier terminal de télécommunication (D1') et un autre terminal de télécommunica-tion, une indication correspondant à l'état d'utilisation "raccroché" est transmise au dispositif de connexion du deuxième système de réseau et un signe acoustique ou optique ou tactile correspondant est émis vers le troisième terminal de télécommunication, et/ou
d) après que la durée prédéterminée se soit écoulée suite à la fin d'une liaison de communication entre le premier terminal de télécommunication (D1') et un autre terminal de télécommunication et en dehors de l'établissement et de l'existence d'une telle liaison, une indication correspondant à l'état d'utilisation "libre" est transmise au dispositif de liaison du deuxième système de réseau et un signe acoustique ou optique ou tactile correspondant est émis vers le troisième terminal de télécommunication.

7. Dispositif de télécommunication (Xv, X_{M}, X_{S}; D1, D1') conçu en particulier comme terminal de télécommunication, lequel est conçu pour fonctionner dans un premier système de réseau dans lequel une première technologie de réseau est utilisée, et présentant une unité de traitement de données (Anw, Plugin-V, App-V) sur laquelle est stocké un programme d'ordinateur qui, en fonctionnement
a) détecte un état d'utilisation du dispositif de télécommunication (Xv, X_{M}, X_{S}; D1, D1') et est conçu pour transmettre l'état d'utilisation à un autre dispositif de télécommunication (Xv, X_{M}, X_{S}; D1, D1') dans un deuxième système de réseau dans lequel une deuxième technologie de réseau différente de la première technologie de réseau est utilisée, et
b) reçoit des données qui indiquent l'état d'utilisation d'un autre dispositif de télécommunication (X_{V}, X_{M}, X_{S}; D1, D1') d'un deuxième système de réseau dans lequel une deuxième technologie différente de la première technologie de réseau est utilisée, et, lors de la réception d'une activité de communication vers ou depuis un troisième dispositif de télécommunication (v1, v2, m1, m2, s1, s2 ; D2) extérieur au groupe, fournissent une réponse de communication au troisième dispositif de télécommunication (v1, v2, m1, m2, s1, s2 ; D2), dans la définition de laquelle les données reçues sont prises en compte ;
le premier système de réseau et le deuxième système de réseau étant reliés entre eux par un dispositif d'interface de réseau, en particulier une passerelle.

8. Produit de programme informatique comprenant des données pour un programme informatique, en particulier un logiciel d'application, conçues pour, lors de la sauvegarde des données sur un dispositif de traitement de données (Anw, Plugin-V, App-V) d'un dispositif de télécommunication (X_{V}, X_{M}, X_{S}; D1, D1') dans un premier système de réseau dans lequel une première technologie de réseau est utilisée, et lorsque le programme informatique est exécuté,
a) faire en sorte que l'état d'utilisation du dispositif de télécommunication (Xv, X_{M}, X_{S}; D1, D1') soit enregistré et transmis à un autre dispositif de télécommunication (Xv, X_{M}, X_{S}; D1, D1') dans un deuxième système de réseau dans lequel une deuxième technologie de réseau, différente de la première technologie de réseau, est utilisée, et
b) faire en sorte que des données indiquant l'état d'utilisation d'un autre dispositif de télécommunication (X_{V}, X_{M}, X_{S}; D1, D1') d'un deuxième système de réseau dans lequel une deuxième technologie de réseau différente de la première technologie de réseau est utilisée, soient reçues, et à faire en sorte que, lors de la récepton d'une activité de communication vers ou depuis un troisième dispositif de télécommunication (v1, v2, m1, m2, s1, s2 ; D2) extérieur au groupe, une réponse de communication soit donnée au troisième dispositif de télécommunication (v1, v2, m1, m2, s1, s2 ; D2), dans la définition de laquelle les données reçues sont prises en compte ;
le premier système de réseau et le deuxième système de réseau étant reliés entre eux par un dispositif d'interface de réseau, en particulier une passerelle.

9. Dispositif de télécommunication (Xv, X_{M}, X_{S}; D1, D1') conçu en particulier comme un terminal de télécommunication, lequel est conçu pour fonctionner dans un premier système de réseau dans lequel une première technologie de réseau est utilisée, et comprenant une unité de traitement de données sur laquelle est stocké un programme informatique conçu pour recevoir, en fonctionnement, des données indiquant qu'une une activité de communication a eu lieu par un premier autre dispositif de communication (Xv, X_{M}, X_{S}; D1, D1') afin d'établir une liaison de communication avec un deuxième autre dispositif de communication (D2) et d'inclure au moins un quatrième dispositif de communication (D3) dans une liaison de communication existante, et de générer, par l'intermédiaire d'un dispositif de sortie (CSTA) du dispositif de télécommunication (Xv, X_{M}, X_{S}; D1, D1'), une sortie dans la définition de laquelle les données reçues sont prises en compte ;
le premier autre dispositif de communication (XV, XM, XS; D1, D1') pouvant être exploité dans un deuxième réseau en utilisant une deuxième technologie de réseau,
la deuxième technologie de réseau étant différente de la première technologie de réseau, et
le premier système de réseau et le deuxième système de réseau étant reliés entre eux par un dispositif d'interface de réseau, en particulier une passerelle.

10. Produit de programme informatique comprenant des données pour un programme informatique, en particulier un logiciel d'application, lequel est conçu pour, lors de la sauvergarde des données sur un dispositif de traitement de données d'un dispositif de télécommunication (Xv, X_{M}, X_{S}; D1, D1') lorsqu'il est actionné, faire en sorte que des données indiquant qu'une communication a été établie par un premier autre dispositif de communication (XV, XM, XS ; D1, D1') soient reçues, afin d'établir une liaison de communication avec un deuxième autre dispositif de communication (D2) et d'inclure au moins un quatrième dispositif de communication (D3) dans une liaison de communication existante, et de générer, par l'intermédiaire d'un dispositif de sortie du dispositif de télécommunication (Xv, X_{M}, X_{S}; D1, D1'), une sortie dans la définition de laquelle les données reçues sont prises en compte ;
le premier autre dispositif de communication (XV, XM, XS ; D1, D1') pouvant être exploité dans un deuxième réseau en utilisant une deuxième technologie de réseau,
la deuxième technologie de réseau étant différente de la première technologie de réseau, et
le premier système de réseau et le deuxième système de réseau étant reliés entre eux par un dispositif d'interface de réseau, en particulier une passerelle.
